# EUROPÄISCHE PATENTANMELDUNG

(11) **EP 0 831 188 A2**
(43) Veröffentlichungstag der Anmeldung: **25.03.1998**
(21) Anmeldenummer: 97116449.6
(22) Anmeldetag: 22.09.1997
(51) Int. Cl.: E04H 1/00, B01D 29/60, B01D 29/66

(54) **Kreiselmotorpumpe für Filteranlagen**

(30) Priorität: 24.09.1996 DE 19639099
(71) Anmelder: WILO GmbH, 44236 Dortmund (DE)
(72) Erfinder: Lahusen, Christoph, Dipl.-Ing., 44139 Dortmund (DE)
(74) Vertreter: COHAUSZ HASE DAWIDOWICZ & PARTNER

(57) **Zusammenfassung**

Die Erfindung betrifft eine Kreiselmotorpumpe für Filteranlagen, insbesondere für Schwimmbadfilteranlagen, die durch ein Rückspülen reinigbar sind, wobei die Pumpe einen externen oder integrierten elektronischen Frequenzumformer aufweist, der über einen Sensor die einander unterschiedlichen Volumenströme für Filtern und Rückspülen direkt oder indirekt erfaßt und über eine Drehzahlmodulation konstant hält. Die Verschmutzung des Filterbettes über die höhere Drehzahl oder Leistungs- oder Stromaufnahme oder den höheren Differenzdruck der nachregelnden Pumpe ist erkennbar. Bei Überschreiten einer vorgegebenen Grenze schaltet die Pumpe auf Rückspülbetrieb.

## Beschreibung

Die Erfindung betrifft eine Kreiselmotorpumpe für Filteranlagen, insbesondere für Schwimmbadfilteranlagen, die durch ein Rückspülen reinigbar sind.

Schwimmbadfilteranlagen werden zur Filtration von Schwimmbadwasser eingesetzt. Das Beckenwasser wird durch eine Filterpumpe über einen Filter gefördert und im Filter mechanisch von ungelösten Schmutzstoffen gereinigt. Dieses gereinigte Wasser wird durch Druckleitungen wieder in das Schwimmbecken gefördert (Filtern). Im Laufe des Filterbetriebes setzt sich der Filter mit Schmutzstoffen zu. Daher muß nach Erreichen einer bestimmten Verschmutzungsgrenze der Filter gereinigt werden. Hierzu wird der Filter in umgekehrter Strömungsrichtung durchströmt und das Schmutzwasser in den Abwasserkanal gefördert (Rückspülen). Anschließend wird das Filterbett kurzfristig in Filtrationsrichtung durchströmt, aber das Filtrat ebenfalls in den Abwasserkanal geleitet (Klarspülen).

Schwimmbadfilteranlagen benötigen im Filterbetrieb geringere Volumenströme als im Rückspülbetrieb.

Der Betriebspunkt der eingebauten Filterpumpe wird auf den Filterbetrieb ausgelegt. Bei sehr großen Rückspülvolumenströmen kann daher eine zweite Pumpe erforderlich sein, die wahrend des Rückspülenes im Parallelbetrieb zur Filterpumpe zugeschaltet wird. Die erforderlichen Volumenströme für Filtern (Qf) und Rückspülen (Qr) müssen exakt eingehalten werden, um über exakte Filter und Rückspülgeschwindigkeiten im Filter optimale Hygiene zu erreichen. Durch fehlerhafte Berechnung der hydraulischen Widerstände oder durch Verschmutzung des Filterbettes können Abweichungen der Volumenströme von den erforderlichen Volumenströmen auftreten.

Aufgabe der Erfindung ist es, eine Kreiselmotorpumpe der eingangs genannten Art so zu verbessern, daß bei einfacher Funktion und Bauweise für das Filtern und Rückspülen sowie insbesondere für das Klarspülen vorgegebene Volumensströme exakt erzeugbar sind.

Diese Aufgabe wird erfindungsgemäß dadurch gelöst, daß die Pumpe einen externen oder integrierten elektronischen Frequenzumformer aufweist, der über mindestens einen Sensor die einander unterschiedlichen Volumenströme für Filtern und Rückspülen erfaßt und über eine Drehzahlmodulation konstant hält und daß die Verschmutzung des Filterbettes über die höhere Drehzahl oder Leistungsoder Stromaufnahme oder den höheren Differenzdruck der nachregelnden Pumpe erkennbar ist und bei Überschreiten einer vorgegebenen Grenze die Pumpe auf Rückspülbetrieb schaltet.

Hierdurch wird ein optimaler Filter- und Rückspülbetrieb bei geringem Aufwand erreicht. Unabhängig von äußeren hydraulischen Widerständen und unabhängig von der Verschmutzung des Filterbettes werden konstante vorgegebene Volumenströme für Filterbetrieb und Rückspülbetrieb eingehalten.

Ausführungsbeispiele der Erfindung werden im folgenden näher beschrieben.

Eine Kreiselpumpe mit angeschlossenem, einen elektronischen Frequenzumformer aufweisenden Elektromotor pumpt das zu reinigende Wasser - insbesondere eines Schwimmbades - durch ein Filter. Das Filter besitzt ein Gehäuse mit Ein- und Auslaß und im Gehäuseinneren befindet sich ein insbesondere körniges Filtermittel, das vom Wasser in einer Richtung mit einem ersten Volumenstrom durchflossen wird. Soll das Filtermittel gereinigt werden, so wird durch dieselbe Pumpe ein doppelt großer Volumensstrom in umgekehrter Flußrichtung erzeugt. Hierzu besteht hinter der Pumpe nachgeschaltet eine Rücklaufleitung mit Ventilen, die eine entsprechende Verbindung zum Filter erzeugen.

Damit die notwendigen Volumensströme exakt eingehalten werden, insbesondere unabhängig vom Verschmutzungsgrad und Flußwiderstand des Filters, ist mindestens ein Sensor am Fließweg vorzugsweise in der Leitung vor dem Filter angeordnet. Der Sensor kann alternativ auch in der Pumpe, vorzugsweise im Saug- oder Druckstutzen angebracht werden. Dieser Sensor mißt die Größe des Volumenstroms und ist an den Frequenzumformer angeschlossen, der entsprechend den eingehenden Meßwerten die Pumpendrehzahl steuert.

Der Frequenzumformer regelt die für Filterbetrieb und Rückspülbetrieb benötigten unterschiedlichen Volumenströme (Qf und Qr) entweder nach Handeinstellung auf Filter- oder Rückspülbetrieb automatisch, oder er wird entsprechend über den Filteranlagenschaltkasten angesteuert. Die Verschmutzung des Filterbettes wird über die höhere Drehzahl oder Leistungs- oder Stromaufnahme oder den höheren Differenzdruck der nachregelnden Pumpe erkannt und bei Überschreiten einer definierten Grenze schaltet die Pumpe auf Rückspülbetrieb. Die Regelelektronik an den Filteranlagenschaltkasten gibt die Information Filtern oder Rückspülen weiter, da der Filteranlagenschaltkasten die Ventileinstellung entsprechend steuern muß. Die Pumpe weist einen Naßläufermotor oder einen Trockenläufermotor auf.

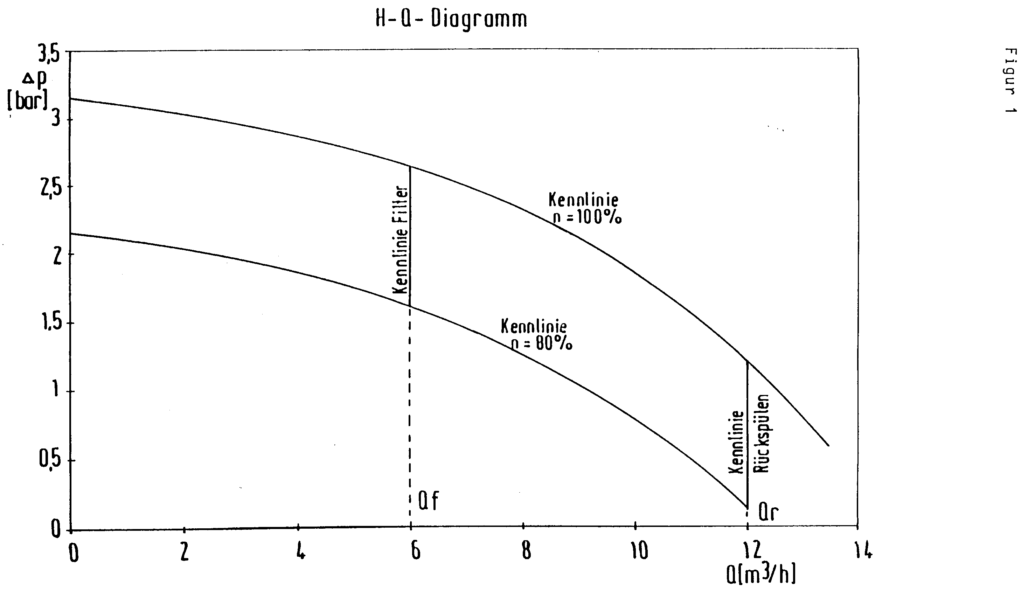

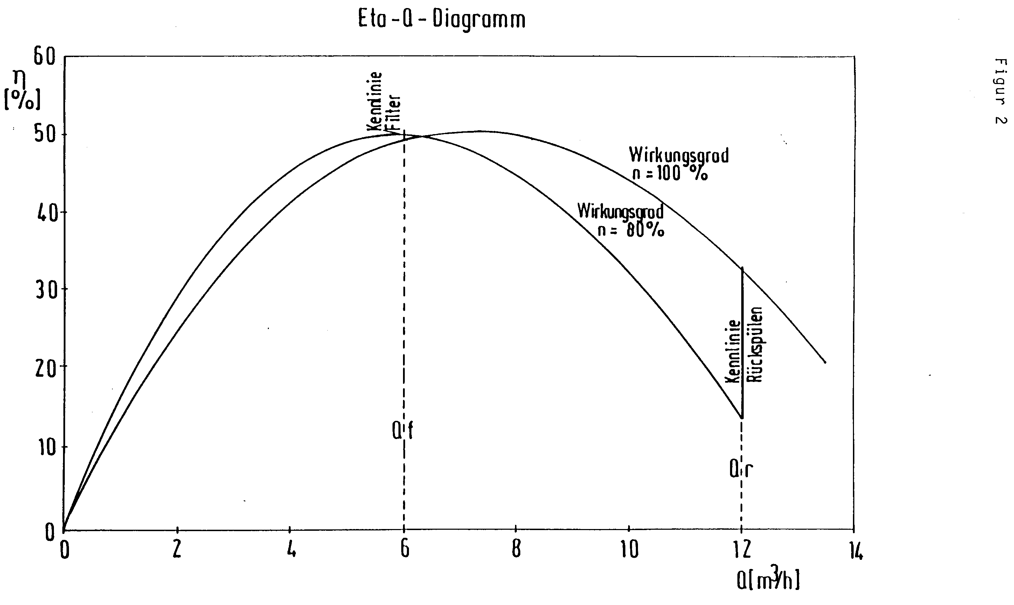

## Patentansprüche

1. Kreiselmotorpumpe für Filteranlagen, insbesondere für Schwimmbadfilteranlagen, die durch ein Rückspülen reinigbar sind, **dadurch gekennzeichnet,** daß die Pumpe einen externen oder integrierten elektronischen Frequenzumformer aufweist, der über einen Sensor die einander unterschiedlichen Volumenströme für Filtern und Rückspülen direkt oder indirekt erfaßt und über eine Drehzahlmodulation konstant hält, und daß die Verschmutzung des Filterbettes über die höhere Drehzahl oder Leistungs- oder Stromaufnahme oder den höheren Differenzdruck der nachregelnden Pumpe erkennbar ist und bei Überschreiten einer vorgegebenen Grenze die Pumpe auf Rückspülbetrieb schaltet.
